# EUROPEAN PATENT APPLICATION

(11) **EP 3 239 970 A1**
(43) Date of publication of application: **01.11.2017**
(21) Application number: 15871841.1
(22) Date of filing: 01.12.2015
(51) Int. Cl.: G09G 3/32, G09G 3/3233, G09G 3/3291

(54) **GAMMA VOLTAGE ADJUSTING CIRCUIT AND METHOD FOR DRIVER CHIP AS WELL AS AMOLED DISPLAY**

(30) Priority: 23.12.2014 CN 201410811967
(71) Applicant: Kunshan Go-Visionox Opto-Electronics Co., Ltd., KunShan City, Jiangsu 215300 (CN)
(72) Inventor: WANG, Long, Kunshan Jiangsu 215300 (CN); KAWASHIMA, Shingo, Kunshan Jiangsu 215300 (CN); ZHU, Xiujian, Kunshan Jiangsu 215300 (CN); GE, Mingwei, Kunshan Jiangsu 215300 (CN)
(74) Representative: Banzer, Hans-Jörg
(86) International application number: PCT/CN2015/096087
(87) International publication number: WO 2016/101772

(57) **Abstract**

A gamma voltage adjusting circuit and method for a driver IC, as well as an AMOLED display device are disclosed. The gamma voltage adjusting circuit for the driver IC includes an ADC unit (12), a logic determination unit (13), a voltage adjustment unit (14) and a gamma generation unit (15). In the AMOLED display device, the driver IC is connected to an ELVDD power supply cable so that an ELVDD power supply voltage is input to the driver IC. The ADC unit (12) converts the voltage signal to a digital signal, and the logic determination unit (13) determines a change in the ELVDD power supply voltage based on the digital signal and generates an adjusting signal. The voltage adjustment unit (14) generates a corresponding adjusting voltage, and the gamma generation unit (15) adjusts a gamma voltage. In this way, variations in brightness of the display device or display quality inconsistencies between different areas thereof caused by changes in the ELVDD power supply voltage can be avoided, and an improvement in display quality can be obtained.

## Description

### TECHNICAL FIELD

The present invention relates to the field of flat panel display devices and, in particular, to a gamma voltage adjusting circuit and method for a driver integrated circuit (IC), as well as an active matrix organic light-emitting diode (AMOLED) display device.

### BACKGROUND

Active matrix organic light-emitting diode (AMOLED) display devices are active devices with advantages such as high contrasts, wider viewing angles, lower power consumptions and smaller thicknesses over thin-film-transistor liquid-crystal display (TFT-LCD) devices which are currently mainstream devices in this art.

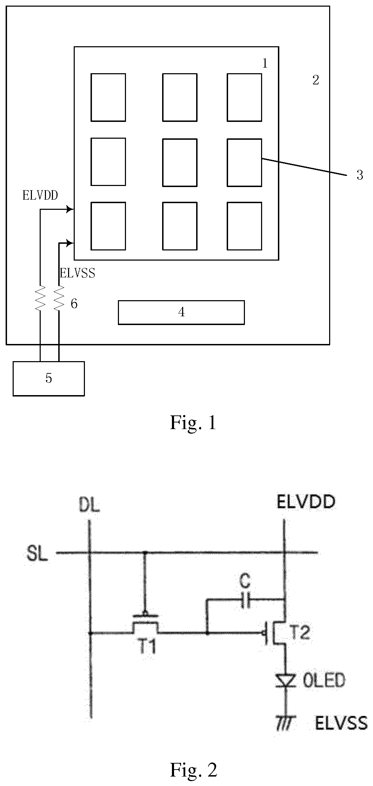

Fig. 1 is a schematic illustration of a conventional AMOLED display device. As shown in Fig. 1, the AMOLED display device includes a display area 1 and a non-display area 2 that surrounds the display area 1. A number of regularly arranged pixel elements 3 are disposed in the display area 1. A driver integrated circuit (IC) 4 is disposed in the non-display area 2. The driver IC 4 is configured to provide drive signals to the pixel elements 3. Activation of the AMOLED display device requires two power supply voltages ELVDD and ELVSS which are provided by a power IC 5. However, the voltage ELVDD is susceptible to changes due to line impedances 6, instability of power IC 5 and temperature variations.

Fig. 2 is a diagrammatic illustration of a pixel circuit in the conventional AMOLED display device. The pixel circuit includes a first thin-film transistor T1, a second thin-film transistor T2, a capacitor C and an organic light-emitting diode (OLED). The OLED emits light with a brightness level determined by a current flowing through the OLED. Specifically, the second thin-film transistor T2 is connected between the power supply voltage ELVDD and an anode of the OLED, with the capacitor C bridged between a gate of the second thin-film transistor T2 and ELVDD. A cathode of the OLED is connected to the power supply voltage ELVSS, and the first thin-film transistor T1 is connected between a data line DL and the gate of the second thin-film transistor T2. A gate of the first thin-film transistor T1 is connected to a scan line SL, so that the first thin-film transistor T1 is switched on or off under the effect of a scan signal transmitted by the scan line SL. With combined reference to Figs. 1 and 2, a signal voltage (i.e., a gamma voltage resulting in the displaying of one of a number of gray levels) generated by the driver IC 4 is transmitted to the pixel circuit via the data line DL and is applied to the gate of the second thin-film transistor T2 via the first thin-film transistor T1. With the second thin-film transistor T2 being turned on, the current flowing through the OLED is determined by the difference between the power supply voltage ELVDD and the signal voltage transmitted from DL. That is, the brightness of the OLED is under the control of the power supply voltage ELVDD and the gamma voltage output by the driver IC 4. As can be seen from Fig. 2, changes in ELVDD may pose a direct impact on the current flowing through the OLED and hence the brightness of the OLED. Therefore, changes in ELVDD can lead to variations in brightness of the display device or display quality inconsistencies between different areas thereof.

### SUMMARY OF THE INVENTION

It is an objective of the present invention to address the aforementioned variations in brightness of a display device or display quality inconsistencies between different areas thereof caused by ELVDD changes by presenting a gamma voltage adjusting circuit and method for a driver IC, as well as an active matrix organic light-emitting diode (AMOLED) display device.

This objective is attained by a gamma voltage adjusting circuit for a driver integrated circuit (IC) according to the present invention, which includes an analog-to-digital conversion unit, a logic determination unit, a voltage adjustment unit and a gamma generation unit. The analog-to-digital conversion unit is configured to convert an input voltage of the driver IC to a digital signal and transmit the digital signal to the logic determination unit. The logic determination unit is configured to determine a change in the input voltage based on the digital signal and generate an adjusting signal and transmit the adjusting signal to the voltage adjustment unit. The voltage adjustment unit is configured to generate a corresponding adjusting voltage based on the adjusting signal and transmit the adjusting voltage to the gamma generation unit. The gamma generation unit is configured to adjust a gamma voltage to be output based on the adjusting voltage.

Optionally, the input voltage may be an ELVDD power supply voltage.

Optionally, the circuit may further include a filter unit configured to filter noise from the input voltage of the driver IC and transmit the filtered input voltage to the analog-to-digital conversion unit.

Accordingly, the present invention also provides a gamma voltage adjusting method, including:
converting, by an analog-to-digital conversion unit, an input voltage of the driver IC to a digital signal and transmitting the digital signal to a logic determination unit;
determining, by the logic determination unit, a change in the input voltage based on the digital signal, generating an adjusting signal and transmitting the adjusting signal to a voltage adjustment unit;
producing, by the voltage adjustment unit, a corresponding adjusting voltage based on the adjusting signal and transmitting the adjusting voltage to a gamma generation unit; and
adjusting, by the gamma generation unit, a gamma voltage to be output based on the adjusting voltage.

Optionally, the input voltage may be an ELVDD power supply voltage.

Optionally, the method may further include, prior to converting the input voltage by the ADC unit: filtering, by a filter unit, a noise from the input voltage of the driver IC and transmitting the filtered input voltage to the analog-to-digital conversion unit.

Accordingly, the present invention also provides an active matrix organic light-emitting diode (AMOLED) display device, including:
a display panel and a driver integrated circuit (IC) for providing the display panel with a drive signal, wherein the driver IC is mounted on the display panel, and the driver IC includes a gamma voltage adjusting circuit as defined above.

Optionally, the input voltage may be an ELVDD power supply voltage.

Optionally, the display panel may include a display area and a non-display area surrounding the display area, wherein a plurality of pixel elements are disposed in the display area; and the plurality of pixel elements are provided with the ELVDD power supply voltage by a power IC via an ELVDD power supply cable.

Optionally, a connection point of the driver IC and the ELVDD power supply cable may be in the non-display area of the display panel.

Compared to the prior art, the gamma voltage adjusting circuit and method, as well as the AMOLED display device, according to the present invention have the following beneficial effects:
1. The gamma voltage adjusting circuit includes an ADC unit, a logic determination unit, a voltage adjustment unit and a gamma generation unit, in which the ADC unit converts a voltage signal input of the driver IC to a digital signal and transmits the digital signal to the logic determination unit; the logic determination unit determines a change in the input voltage based on the digital signal and generates an adjusting signal and transmits the adjusting signal to the voltage adjustment unit; the voltage adjustment unit generates a corresponding adjusting voltage and transmits the adjusting voltage to the gamma generation unit; and the gamma generation unit adjusts the gamma voltage based on the adjusting voltage, so that an impact of the change in the input voltage is reduced.
2. In the AMOLED display device, the driver IC is connected to the ELVDD power supply cable so that the ELVDD power supply voltage is transmitted to the driver IC, and in the driver IC, the gamma voltage adjusting circuit transmits a change in the ELVDD power supply voltage to the gamma generation unit which then makes an adjustment in a gamma voltage to be output to compensate for the change in the ELVDD power supply voltage, so that variations in brightness of the display device or display quality inconsistencies between different areas thereof caused by such changes can be avoided and an improvement in display quality is obtainable.

### BRIEF DESCRIPTION OF THE DRAWINGS

Fig. 1 is a schematic illustration of a conventional AMOLED display device.
Fig. 2 is a diagrammatic illustration of a pixel circuit in the conventional AMOLED display device.
Fig. 3 schematically illustrates a gamma voltage adjusting circuit for a driver IC in accordance with an embodiment of the present invention.
Fig. 4 is a flow chart graphically illustrating a gamma voltage adjusting method for a driver IC in accordance with an embodiment of the present invention.
Fig. 5 is a schematic illustration of an AMOLED display device in accordance with an embodiment of the present invention.

### DETAILED DESCRIPTION

The present invention will be described in greater detail below with reference to the accompany drawings so that it will become more readily apparent. It is a matter of course that the present invention is not limited to the specific embodiment set forth below and general substitutions well known to those skilled in the art are also encompassed within the scope of the invention.

In addition, the following detailed description of the present invention is to be read in conjunction with the schematic drawings which may not be drawn to scale in order to facilitate the description, and this shall not be construed as limiting the present invention.

A core concept of the present invention is that a gamma voltage adjusting circuit for a driver IC includes an analog-to-digital conversion (ADC) unit, a logic determination unit, a voltage adjustment unit and a gamma generation unit, in which the ADC unit converts an input voltage signal of the driver IC to a digital signal and transmits the digital signal to the logic determination unit, the logic determination unit determines a change in the input voltage based on the digital signal and generates an adjusting signal and transmits the adjusting signal to the voltage adjustment unit, the voltage adjustment unit generates a corresponding adjusting voltage and transmits the corresponding adjusting voltage to the gamma generation unit; and the gamma generation unit adjusts a gamma voltage based on the adjusting voltage, so that an impact of the change in the input voltage is reduced.

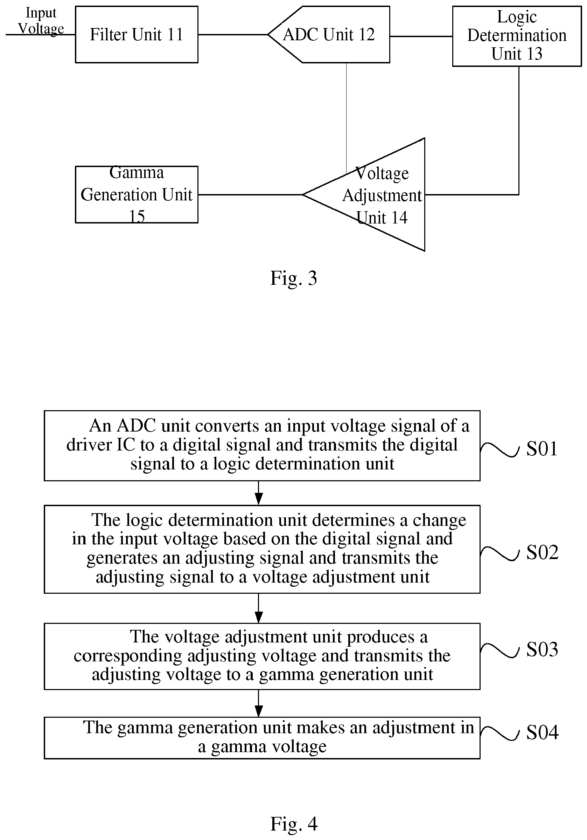

Reference is now made to Fig. 3, which schematically shows a gamma voltage adjusting circuit for a driver IC in accordance with an embodiment of the present invention. As shown in Fig. 3, the gamma voltage adjusting circuit for the driver IC includes: an ADC unit 12, a logic determination unit 13, a voltage adjustment unit 14 and a gamma generation unit 15. The ADC unit 12 converts an input voltage signal of the driver IC to a digital signal and transmits the digital signal to the logic determination unit 13. The logic determination unit 13 determines a change in the input voltage based on the digital signal and generates an adjusting signal and transmits the adjusting signal to the voltage adjustment unit 14. The voltage adjustment unit 14 generates a corresponding adjusting voltage and transmits the adjusting voltage to the gamma generation unit 15. The gamma generation unit 15 adjusts a gamma voltage to be output based on the adjusting voltage.

Optionally, the gamma voltage adjusting circuit for the driver IC may further include a filter unit 11 which filters noise from the input voltage of the driver IC and transmits the filtered voltage to the ADC unit 12. In this embodiment, the filter unit 11 may be a low-frequency filter for removing high-frequency noise in the input voltage of the driver IC.

The input voltage may be an ELVDD power supply voltage which may be subject to frequent changes during its transmission to the pixel circuit caused by, for example, line impedances, power IC instability and temperature variations. The gamma voltage adjusting circuit for the driver IC can reduce an impact of such changes in the ELVDD power supply voltage by transferring the changes to the gamma generation unit 15 and adjusting the gamma voltage to be output to a stable value by the gamma generation unit 15.

Accordingly, the present invention also provides a gamma voltage adjusting method for a driver IC. Referring to Fig. 4 which is a flow chart graphically illustrating a gamma voltage adjusting method for a driver IC in accordance with an embodiment of the present invention. With combined reference to Figs. 3 and 4, the method includes:
step S01 in which the ADC unit 12 converts an input voltage signal of the driver IC to a digital signal and transmits the digital signal to the logic determination unit 13;
step S02, in which the logic determination unit 13 determines a change in the input voltage based on the digital signal and generates an adjusting signal and transmits the adjusting signal to the voltage adjustment unit 14;
step S03, in which the voltage adjustment unit 14 generates a corresponding adjusting voltage and transmits the adjusting voltage to the gamma generation unit 15; and
step S04, in which the gamma generation unit 15 makes an adjustment in a gamma voltage based on the adjusting voltage.

In the step S01, before the ADC unit 12 converts the voltage signal, the filter unit 11 may filter noise from the input voltage of the driver IC and transmit the filtered voltage to the ADC unit 12. In this embodiment, the filter unit 11 may be a low-frequency filter for removing high-frequency noise in the input voltage to the driver IC.

The input voltage may be an ELVDD power supply voltage which may be subject to frequent changes during its transmission to the pixel circuit caused by, for example, line impedances, power IC instability and temperature variations. The gamma voltage adjusting circuit for the driver IC can reduce an impact of such changes in the ELVDD power supply voltage by transferring the changes to the gamma generation unit 15 and adjusting the gamma voltage to be output to a stable value by the gamma generation unit 15.

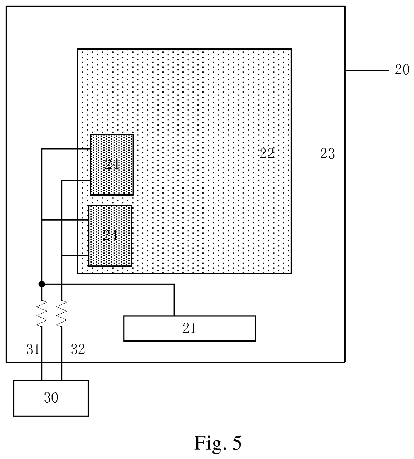

Accordingly, the present invention also provides an active matrix organic light-emitting diode (AMOLED) display device. Reference is now made to Fig. 5, which is a schematic illustration of an AMOLED display device in accordance with an embodiment of the present invention. As shown in Fig. 5, the AMOLED display device includes a display panel 20 and a driver IC 21 which provides the display panel 20 with a drive signal. The driver IC 21 is mounted on the display panel 20 and incorporates the gamma voltage adjusting circuit for the driver IC as described above.

In this embodiment, the driver IC 21 can be crimped to a terminal of the display panel 20 such that a metal wire connecting the terminal can help provide the drive signal from the driver IC 21 to the display panel 20.

The display panel 20 includes a display area 22 and a non-display area 23 that surrounds the display area 22. A number of regularly arranged pixel elements 24 (only two of them are shown in the figure for simplicity) are disposed in the display area. A power IC 30 provides the pixel elements 24 with an ELVDD power supply voltage via an ELVDD power supply cable 31 and provides the pixel elements 24 with an ELVSS power supply voltage via an ELVSS power supply cable 32. In the non-display area 23 of the display panel 20, the driver IC 21 is connected to the ELVDD power supply cable 31. The ELVDD power supply cable 31 and the ELVSS power supply cable 32 on the display panel 20 may be metal wires which can be fabricated in the same process as any metal layer in a thin-film-transistor (TFT) array substrate in the display panel 20.

Concurrently with the power IC 30 providing the ELVDD power supply voltage to the pixel elements 24 via the ELVDD power supply cable 31, the ELVDD power supply voltage is also input to the gamma voltage adjusting circuit in the driver IC 21. With combined reference to Figs. 3 and 5, the filter unit 11 may filter noise from the ELVDD power supply voltage received by the driver IC 21 and transmits the filtered voltage signal to the ADC unit 12. The ADC unit 12 converts the filtered voltage signal to a digital signal and transmits the digital signal to the logic determination unit 13. The logic determination unit 13 determines a change in the ELVDD power supply voltage based on the digital signal and generates an adjusting signal and transmits the adjusting signal to the voltage adjustment unit 14. The voltage adjustment unit 14 generates a corresponding adjusting voltage and transmits the adjusting voltage to the gamma generation unit 15. Based on the adjusting voltage, the gamma generation unit 15 adjusts the gamma voltage to be output to the display panel 30 to a stable value. According to a preferred embodiment of the present invention, upon the ELVDD power supply voltage being reduced by an amount, the gamma voltage output by the gamma voltage adjusting circuit is reduced by the same amount from a corresponding value in a gamma curve. When the ELVDD power supply voltage is increased by an amount, the gamma voltage output by the gamma voltage adjusting circuit is also raised by the same amount from the corresponding value in the gamma curve. In this way, changes in the ELVDD power supply voltage can be compensated for and variations in brightness of the display device or display quality inconsistencies between different areas thereof caused by such changes can be avoided. Therefore, an improvement in display quality can be obtained.

In the above embodiment, in the non-display area 23 of the display panel 20, the driver IC 21 is connected to the ELVDD power supply cable 31, so that the gamma voltage adjusting circuit in the driver IC can reduce an impact of changes in the ELVDD power supply voltage, thereby avoiding variations in brightness of the display device or display quality inconsistencies between different areas thereof caused by such changes and improving the display quality. It will be appreciated that, the gamma voltage adjusting circuit in the driver IC may also be used to reduce changes in other input voltages such as the ELVSS power supply voltage or a voltage directly provided by the driver IC to the display panel.

In conclusion, the gamma voltage adjusting circuit in the driver IC according to the present invention includes an ADC unit, a logic determination unit, a voltage adjustment unit and a gamma generation unit, in which the ADC unit converts a voltage signal input to the driver IC to a digital signal and transmits the digital signal to the logic determination unit, the logic determination unit determines a change in the input voltage based on the digital signal and generates an adjusting signal and transmits the adjusting signal to the voltage adjustment unit, the voltage adjustment unit generates a corresponding adjusting voltage and transmits the adjusting voltage to the gamma generation unit, and the gamma generation unit adjusts the gamma voltage based on the adjusting voltage, so that an impact of the change in the input voltage is reduced. In addition, in the AMOLED display device according to the present invention, the driver IC is connected to the ELVDD power supply cable so that the ELVDD power supply voltage is transmitted to the driver IC. In the driver IC, the gamma voltage adjusting circuit transmits a change in the ELVDD power supply voltage to the gamma generation unit which then makes an adjustment in a gamma voltage to be output to compensate for the change in the ELVDD power supply voltage. In this way, variations in brightness of the display device or display quality inconsistencies between different areas thereof caused by such changes can be avoided, and an improvement in display quality is obtainable.

The foregoing description presents merely preferred embodiments of the present invention and does not limit the scope of the invention in any way. All changes and modifications made light of the foregoing disclosure by those of
ordinary skill in the art fall within the scope of the appended claims.

## Claims

1. A gamma voltage adjusting circuit for a driver integrated circuit (IC), comprising an analog-to-digital conversion unit, a logic determination unit, a voltage adjustment unit and a gamma generation unit, wherein: the analog-to-digital conversion unit is configured to convert an input voltage of the driver IC to a digital signal and transmit the digital signal to the logic determination unit; the logic determination unit is configured to determine a change in the input voltage based on the digital signal and generate an adjusting signal and transmit the adjusting signal to the voltage adjustment unit; the voltage adjustment unit is configured to generate a corresponding adjusting voltage based on the adjusting signal and transmit the adjusting voltage to the gamma generation unit; and the gamma generation unit is configured to adjust a gamma voltage to be output based on the adjusting voltage.

2. The gamma voltage adjusting circuit of claim 1, wherein the input voltage is an ELVDD power supply voltage.

3. The gamma voltage adjusting circuit of claim 1, further comprising a filter unit configured to filter noise from the input voltage of the driver IC and transmit the filtered input voltage to the analog-to-digital conversion unit.

4. A gamma voltage adjusting method for a driver integrated circuit (IC), comprising:
converting, by an analog-to-digital conversion unit, an input voltage of the driver IC to a digital signal and transmitting the digital signal to a logic determination unit;
determining, by the logic determination unit, a change in the input voltage based on the digital signal, generating an adjusting signal and transmitting the adjusting signal to a voltage adjustment unit;
producing, by the voltage adjustment unit, a corresponding adjusting voltage based on the adjusting signal and transmitting the adjusting voltage to a gamma generation unit; and
adjusting, by the gamma generation unit, a gamma voltage to be output based on the adjusting voltage.

5. The gamma voltage adjusting method of claim 4, wherein the input voltage is an ELVDD power supply voltage.

6. The gamma voltage adjusting method of claim 4, further comprising, prior to converting the input voltage by the analog-to-digital conversion unit:
filtering, by a filter unit, a noise from the input voltage of the driver IC and transmitting the filtered input voltage to the analog-to-digital conversion unit.

7. An active matrix organic light-emitting diode (AMOLED) display device, comprising a display panel and a driver integrated circuit (IC) for providing the display panel with a drive signal, wherein the driver IC is mounted on the display panel, and the driver IC comprises a gamma voltage adjusting circuit as defined in any one of claims 1 to 3.

8. The AMOLED display device of claim 7, wherein the input voltage is an ELVDD power supply voltage.

9. The AMOLED display device of claim 8, wherein: the display panel comprises a display area and a non-display area surrounding the display area; a plurality of pixel elements are disposed in the display area; and the plurality of pixel elements are provided with the ELVDD power supply voltage by a power IC via an ELVDD power supply cable.

10. The AMOLED display device of claim 9, wherein a connection point of the driver IC and the ELVDD power supply cable is in the non-display area of the display panel.

## Amended claims

Statement under Art. 19.1 PCT
1. A gamma voltage adjusting circuit for a driver integrated circuit (IC), comprising an analog-to-digital conversion unit (12), a logic determination unit (13), a voltage adjustment unit (14) and a gamma generation unit (15), wherein: the analog-to-digital conversion unit (12) is configured to convert an input voltage of the driver IC (21) to a digital signal and transmit the digital signal to the logic determination unit (13); the logic determination unit (13) is configured to determine a change in the input voltage based on the digital signal and generate an adjusting signal and transmit the adjusting signal to the voltage adjustment unit (14); the voltage adjustment unit (14) is configured to generate a corresponding adjusting voltage based on the adjusting signal and transmit the adjusting voltage to the gamma generation unit (15); and the gamma generation unit (15) is configured to adjust a gamma voltage to be output based on the adjusting voltage.

2. The gamma voltage adjusting circuit of claim 1, wherein the input voltage is an ELVDD power supply voltage.

3. The gamma voltage adjusting circuit of claim 1, further comprising a filter unit configured to filter noise from the input voltage of the driver IC (21) and transmit the filtered input voltage to the analog-to-digital conversion unit (12).

4. A gamma voltage adjusting method for a driver integrated circuit (IC), comprising:
converting, by an analog-to-digital conversion unit (12), an input voltage of the driver IC (21) to a digital signal and transmitting the digital signal to a logic determination unit (13);
determining, by the logic determination unit (13), a change in the input voltage based on the digital signal, generating an adjusting signal and transmitting the adjusting signal to a voltage adjustment unit (14);
producing, by the voltage adjustment unit (14), a corresponding adjusting voltage based on the adjusting signal and transmitting the adjusting voltage to a gamma generation unit (15); and
adjusting, by the gamma generation unit (15), a gamma voltage to be output based on the adjusting voltage.

5. The gamma voltage adjusting method of claim 4, wherein the input voltage is an ELVDD power supply voltage.

6. The gamma voltage adjusting method of claim 4, further comprising, prior to converting the input voltage by the analog-to-digital conversion unit (12):
filtering, by a filter unit, a noise from the input voltage of the driver IC (21) and transmitting the filtered input voltage to the analog-to-digital conversion unit (12).

7. An active matrix organic light-emitting diode (AMOLED) display device, comprising a display panel (20) and a driver integrated circuit (IC) for providing the display panel (20) with a drive signal, wherein the driver IC (21) is mounted on the display panel (20), and the driver IC (21) comprises a gamma voltage adjusting circuit as defined in any one of claims 1 to 3.

8. The AMOLED display device of claim 7, wherein the input voltage is an ELVDD power supply voltage.

9. The AMOLED display device of claim 8, wherein: the display panel (20) comprises a display area (22) and a non-display area (23) surrounding the display area (22); a plurality of pixel elements (24) are disposed in the display area (22); and the plurality of pixel elements (24) are provided with the ELVDD power supply voltage by a power IC (30) via an ELVDD power supply cable (31).

10. The AMOLED display device of claim 9, wherein a connection point of the driver IC (21) and the ELVDD power supply cable (31) is in the non-display area (23) of the display panel (20).
